# EUROPÄISCHE PATENTSCHRIFT

(11) **EP 3 720 733 B1**
(45) Veröffentlichungstag und Bekanntmachung des Hinweises auf die Patenterteilung: **12.04.2023**
(21) Anmeldenummer: 18810981.3
(22) Anmeldetag: 26.11.2018
(51) Int. Cl.: B60L 58/13, B60L 58/20, B60L 58/15, B60L 58/14, B60L 50/16

(54) **VERFAHREN ZUM STEUERN EINER ELEKTRISCHEN ANLAGE EINES ELEKTRISCH ANTREIBBAREN KRAFTFAHRZEUGS MIT MEHREREN BATTERIEN SOWIE ELEKTRISCHE ANLAGE EINES ELEKTRISCH ANTREIBBAREN KRAFTFAHRZEUGS**
METHOD FOR CONTROLLING AN ELECTRICAL SYSTEM OF AN ELECTRICALLY DRIVABLE MOTOR VEHICLE HAVING A PLURALITY OF BATTERIES, AND ELECTRICAL SYSTEM OF AN ELECTRICALLY DRIVABLE MOTOR VEHICLE
PROCÉDÉ DE COMMANDE D'UNE INSTALLATION ÉLECTRIQUE D'UN VÉHICULE À MOTEUR À ENTRAÎNEMENT ÉLECTRIQUE, DOTÉE DE PLUSIEURS BATTERIES ET INSTALLATION ÉLECTRIQUE D'UN VÉHICULE À ENTRAÎNEMENT ÉLECTRIQUE

(30) Priorität: 04.12.2017 DE 102017221825
(43) Veröffentlichungstag der Anmeldung: 14.10.2020
(73) Patentinhaber: Audi AG, 85045 Ingolstadt (DE)
(72) Erfinder: HACKNER, Thomas, 91171 Greding (DE)
(86) Internationale Anmeldenummer: PCT/EP2018/082498
(87) Internationale Veröffentlichungsnummer: WO 2019/110344

(56) Entgegenhaltungen:
- EP-A1- 1 914 139
- EP-A2- 2 272 722
- WO-A1-2006/112510
- DE-A1- 10 153 509
- DE-A1-102016 101 100
- FR-A1- 2 891 774
- US-A1- 2007 247 106

## Beschreibung

Die vorliegende Erfindung betrifft ein Verfahren zum Steuern einer elektrischen Anlage eines elektrisch antreibbaren Kraftfahrzeugs, wobei die elektrische Anlage mindestens eine Blei-Batterie und mindestens eine Lithium-Batterie umfasst, die über eine Koppelvorrichtung elektrisch miteinander gekoppelt sind, wobei der mindestens einen Blei-Batterie ein erstes Batterieüberwachungsmodul und der mindestens einen Lithium-Batterie ein zweites Batterieüberwachungsmodul zugeordnet sind, umfassend den folgenden Schritt: Festlegen eines unteren und eines ersten oberen Schwellenwerts für einen Ladezustand der Lithium-Batterie. Die Erfindung betrifft überdies eine elektrische Anlage eines elektrisch antreibbaren Kraftfahrzeugs umfassend mindestens eine Blei-Batterie, mindestens eine Lithium-Batterie, die über eine Koppelvorrichtung elektrisch mit der Blei-Batterie gekoppelt ist, ein erstes Batterieüberwachungsmodul, das der mindestens einen Blei-Batterie zugeordnet ist, ein zweites Batterieüberwachungsmodul, das der mindestens einen Lithium-Batterie zugeordnet ist, eine Ladezustandssteuereinrichtung der Lithium-Batterie sowie eine Speichervorrichtung, in der ein unterer und ein erster oberer Schwellenwert für einen Ladezustand der Lithium-Batterie abgespeichert sind.

Im Rahmen des Klimaschutzes werden die CO₂-Vorgaben für Kraftfahrzeuge zunehmend verschärft. Um diesen Rechnung zu tragen, gibt es Bordnetzkonzepte mit leistungsfähigeren Energiespeichern im Vergleich zu Blei-Batterien oder Bordnetzkonzepte mit mehr als einem Energiespeicher. Durch die Verwendung von Rekuperationsvorrichtungen, beispielsweise Riemen-Starter-Generatoren, besteht die Möglichkeit, mehr Energie beispielsweise in den Bremsphasen, zu rekuperieren und auch in Zugphasen eine Lastpunktabsenkung durchzuführen, um den Antrieb des Kraftfahrzeugs, beispielsweise eine Verbrennungskraftmaschine, zu entlasten. Durch eine Lastpunktabsenkung liefert die Verbrennungskraftmaschine ein Moment, das nicht ausreicht, um einem Fahrerwunschmoment zu entsprechen. Die Differenz kann, wie erwähnt, beispielsweise von einem Riemen-Starter-Generator geliefert werden, der dazu elektrische Energie aus einem Energiespeicher entnimmt. Dadurch kann erreicht werden, dass die Verbrennungskraftmaschine in einem hinsichtlich des Wirkungsgrads optimalen Bereich betrieben wird. Auf diese Weise lässt sich Kraftstoff sparen.

Der optimale Betriebsbereich der Verbrennungskraftmaschine kann auch größer als das Fahrerwunschmoment sein. In diesem Fall kann der Riemen-Starter-Generator entsprechend angesteuert werden und die Energie zur Erzeugung des Differenzmoments kann in elektrische Energie umgewandelt werden. Da der Motor in diesem Fall in einem optimalen Betriebspunkt arbeitet, wird die elektrische Energie effizient erzeugt. Dabei handelt es sich um eine gesteuerte Lastpunktanhebung.

In derartigen Bordnetzen werden Energiespeicher benötigt, die mehr Energie und Leistung aufnehmen und abnehmen können als in einem konventionellen Bordnetz mit einer 12V-Blei-Batterie. Dabei hat es sich herausgestellt, dass eine Kombination einer Blei-Batterie mit einer Lithium-Batterie besonders vorteilhaft ist. Die Blei-Batterie stellt einen hohen Energieinhalt bei geringen Kosten zur Verfügung, während die Lithium-Batterie als ein zyklenfester Speicher zur Rekuperation verwendet werden kann. Bevorzugt wird die Blei-Batterie in einem ersten Spannungsbereich, insbesondere einem Niederspannungsbereich, des Bordnetzes angeordnet und die Lithium-Batterie in einem zweiten Spannungsbereich, insbesondere einem Hochspannungsbereich. Der Niederspannungsbereich kann beispielsweise auf 12V-Niveau liegen, der Hochspannungsbereich auf 48V-Niveau. Dann stellt die Koppelvorrichtung bevorzugt einen DC/DC-Wandler dar. Sind Lithium- und Blei-Batterie auf demselben Spannungsniveau, also beide beispielsweise auf 12V-Niveau, dann stellt die Koppelvorrichtung einen Schalter dar, mit dem die Lithium- und die Blei-Batterie elektrisch leitend miteinander gekoppelt oder elektrisch voneinander getrennt werden können.

Unter einem Mild-Hybrid-Fahrzeug (MHEV=Mild Hybrid Electric Vehicle) werden Hybrid-Fahrzeuge verstanden, bei denen der Elektroantriebsteil den Verbrennungsmotor zur Leistungssteigerung unterstützt. Als elektromotorische Leistungen werden üblicherweise 6-14 kW/t angegeben. Die Gesamtkapazität von Lithium-Batterien, wie sie typischerweise in Mild-Hybrid-Fahrzeugen eingesetzt werden, beträgt üblicherweise zwischen 5 Ah und 20 Ah. Die Gesamtkapazität von in derartigen Kraftfahrzeugen eingesetzten Blei-Batterien beträgt üblicherweise zwischen 25 Ah und 80 Ah.

Aufgrund technologischer Randbedingungen, insbesondere der Lebensdauerauslegung, liegt der nutzbare Ladezustand SOC (state of charge) einer Lithium-Batterie zwischen einem unteren Schwellenwert von etwa 20% und einem oberen Schwellenwert von ca. 80%. Für eine Blei-Batterie liegt der nutzbare SOC-Bereich zwischen etwa 70% und 100%.

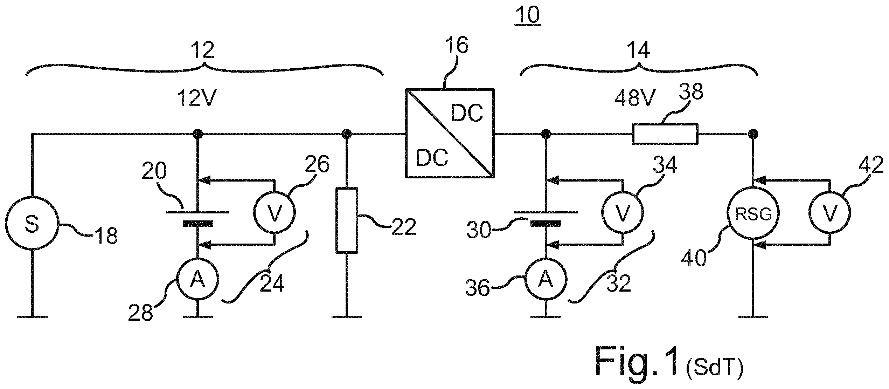

Fig. 1 zeigt in diesem Zusammenhang eine aus dem Stand der Technik bekannte elektrische Anlage 10 eines elektrisch antreibbaren Kraftfahrzeugs. Diese umfasst ein Bordnetz mit einem Niederspannungsbereich 12 sowie einem Hochspannungsbereich 14, die über einen DC/DC-Wandler 16 miteinander gekoppelt sind. In dem dargestellten Beispiel beträgt die Niederspannung ca. 12 V, die Hochspannung ca. 48 V. Der Niederspannungsbereich 12 umfasst einen Starter 18 zum Starten eines Verbrennungsmotors des Kraftfahrzeugs, eine Blei-Batterie 20 sowie einen beispielhaft eingezeichneten elektrischen Verbraucher 22. Der Blei-Batterie 20 ist ein Batterieüberwachungsmodul 24 zugeordnet, welches es ermöglicht, die an der Blei-Batterie 20 anliegende Spannung sowie den in und aus der Blei-Batterie 20 fließenden Strom zu überwachen. Das Batterieüberwachungsmodul 24 umfasst eine Spannungsmessvorrichtung 26 sowie eine Strommessvorrichtung 28.

Der Hochspannungsbereich 14 umfasst eine Lithium-Batterie 30, der ein Batterieüberwachungsmodul 32 zugeordnet ist. Das Batterieüberwachungsmodul 32 umfasst eine Spannungsmessvorrichtung 34 sowie eine Strommessvorrichtung 36.

Über einen Koppelwiderstand 38 ist eine elektrische Maschine 40, insbesondere ein Riemenstartergenerator, mit der Lithium-Batterie 30 und dem DC/DC-Wandler 16 gekoppelt. Der elektrischen Maschine 40 ist eine Spannungsmessvorrichtung 42 zugeordnet. Eine Strommessung ist in der elektrischen Maschine 40 üblicherweise integriert. Für den Fall, dass in der elektrischen Maschine 40 keine Strommessung integriert ist, ist eine Strommessvorrichtung der elektrischen Maschine 40 zuzuordnen, die dann den in und aus der elektrischen Maschine 40 fließenden Strom misst.

Im Stand der Technik gibt es bereits diverse Ansätze für neue Bordnetzkonzepte:
Aus der DE 10 2014 201 358 A1 ist ein Bordnetz und ein Verfahren zum Betrieb eines Bordnetzes bekannt. Dabei umfasst ein Fahrzeug ein Hoch- und ein Niederspannungsbordnetz und versorgt das Niederspannungsbordnetz über einen Spannungswandler mit Energie aus dem Hochspannungsbordnetz, sobald ein definierter Ladezustand einer Batterie des Niederspannungsbordnetzes unterschritten wird.

Aus der DE 10 2014 201 351 A1 ist ebenfalls ein Bordnetz und ein Verfahren zum Betrieb eines Bordnetzes bekannt. Dabei umfasst ein Fahrzeug Bordnetze unterschiedlicher Spannungen und versorgt das Bordnetz mit niederer Spannung mit Energie aus dem Bordnetz höherer Spannung, sobald ein Ladezustandsschwellenwert einer Batterie des Bordnetzes niederer Spannung unterschritten wird.

Aus der DE 10 2007 004 279 A1 ist ein Mehrspannungsbordnetz für ein Kraftfahrzeug bekannt. Dabei wird ein Niederspannungsbordnetz mittels eines Wandlers mit Energie aus einem Hochspannungsbordnetz versorgt.

In der nachveröffentlichten DE 10 2016 007 505 der vorliegenden Anmelderin wird ein Verfahren zum Steuern einer elektrischen Anlage eines Hybridfahrzeugs beschrieben, bei dem zwei mittels eines DC/DC-Wandlers elektrisch miteinander gekoppelte Bordnetze auf unterschiedlichem Gleichspannungsniveau jeweils einen elektrischen Energiespeicher umfassen, die die gleiche Speicherkapazität für elektrische Ladung bereitstellen. Das Koppeln des DC/DC-Wandlers erfolgt entsprechend einem prädiktiven Fahrbetrieb des Kraftfahrzeugs.

In der DE 10 2016 005 125 wird ein Verfahren zum Steuern einer Energiespeichereinrichtung eines Mild-Hybrid-Kraftfahrzeugs sowie eine Ladezustandssteuereinrichtung für ein Mild-Hybrid-Kraftfahrzeug beschrieben. Dabei wird während mindestens einer Fahrt mindestens ein Lade- und ein Entladevorgang mit Bezug auf mit der Energiespeichereinrichtung ausgetauschte Energiemengen überwacht und daraus mit einer vorgebbaren Wahrscheinlichkeit zu erwartende Energiemengen für zukünftige Lade- und Entladevorgänge ermittelt. Basierend auf diesen Ermittlungen werden der obere und der untere Schwellenwert für einen Zielladezustandsbereich der Energiespeichereinrichtung festgelegt.

Aus der WO 2006/112510 A1, die zur Formulierung des Oberbegriffs von Patentanspruch 9 herangezogen wurde, ist es bekannt, zur Erhöhung der Lebensdauer einer Lithium-Ionen- sowie einer Blei-Säure-Batterie bei einem längeren Abstellen des Kraftfahrzeugs Energie von der Lithium-Ionen-Batterie an die Blei-Säure-Batterie zu übertragen. Dabei wird die Lithium-Ionen-Batterie auf einen Ladestatus von 50% oder darunter ihres Maximalladezustands gebracht.

Die FR 2 891 774 A1 betrifft eine Vorrichtung zur Verwaltung einer Batterie in einem Fahrzeug, die einen Ladezustandsdetektor für die Batterie und Mittel zum teilweisen Entladen der Batterie in Reaktion auf ein Signal des Ladezustandsdetektors umfasst, um einen Ladezustand zu erreichen, der eine lange Lebensdauer der Batterie gewährleistet, wenn das Fahrzeug angehalten wird.

Die Aufgabe der vorliegenden Erfindung besteht darin, ein gattungsgemäßes Verfahren sowie eine gattungsgemäße elektrische Anlage derart weiterzubilden, dass damit ein möglichst ressourcenschonender Betrieb eines Kraftfahrzeugs ermöglicht wird.

Diese Aufgabe wird gelöst durch ein Verfahren mit den Merkmalen von Patentanspruch 1 sowie durch eine elektrische Anlage mit den Merkmalen von Patentanspruch 9.

Der vorliegenden Erfindung liegt die Erkenntnis zugrunde, dass vorhandene Ressourcen besser genutzt werden, wenn die Lebensdauer der Batterien verlängert werden kann und/oder Kraftstoff gespart werden kann. Erstaunlicherweise lassen sich beide gewünschten Effekte durch ein und dieselbe Maßnahme erzielen: Zunächst ist festzuhalten, dass hinsichtlich der Lebensdauer für eine Lithium-Batterie eine Lagerung bei einem niedrigen Ladezustand optimal ist. Für eine Blei-Batterie hingegen ist für eine lange Haltbarkeit ein möglichst hoher Ladezustand bei der Lagerung anzustreben. Dadurch, dass im Stand der Technik bei einer Lithium-Batterie der SOC-Bereich über 80% aus den oben erwähnten Gründen nicht genutzt wird, sind zur Abdeckung eines benötigten Speicherbedarfs größere und damit teurere und schwerere Lithium-Batterien einzusetzen.

Wie der Erfinder der vorliegenden Erfindung erkannt hat, kann jedoch eine Lithium-Batterie während der Fahrt des Kraftfahrzeugs temporär mit einem höheren Ladezustand als 80% betrieben werden, da eine kurzfristige Ladezustandserhöhung für die Lithium-Batterie nicht lebensdauerbeeinflussend ist. Lediglich beim Abstellen des Kraftfahrzeugs muss sichergestellt werden, dass der Ladezustand der Lithium-Batterie wieder in den zulässigen Bereich abgesenkt wurde.

Damit kann während der Fahrt maximal der gesamte Speicher der Lithium-Batterie genutzt werden, wodurch eine kleinere Auslegung der Lithium-Batterie ermöglicht wird. Durch das temporäre Überladen der Lithium-Batterie kann der Benutzer des Kraftfahrzeugs das Kraftfahrzeug überdies länger parken, mindestens 50 Tage, bis das Kraftfahrzeug nicht mehr gestartet werden kann.

Erfindungsgemäß wird deshalb ein über dem ersten oberen Schwellenwert liegender zweiter oberer Schwellenwert festgelegt. Im Fahrbetrieb wird dann ein Ladezustand der Lithium-Batterie zwischen dem unteren und dem zweiten oberen Schwellenwert für den Ladezustand der Lithium-Batterie eingestellt. Beim Abstellen des Kraftfahrzeugs wird der Ladezustand der Lithium-Batterie bestimmt. Falls dieser größer ist als der erste obere Schwellenwert, wird der Ladezustand der Lithium-Batterie auf den ersten oberen Schwellenwert abgesenkt. Auf diese Weise kann während der Fahrt ein größerer Bereich der Lithium-Batterie genutzt werden als im Stand der Technik. Dies wirkt sich nicht lebensdauerverkürzend aus, da nach dem Abstellen der Speicher der Lithium-Batterie in einen hinsichtlich der Lebensdauer zulässigen Bereich entladen wird. Damit können kleinere Lithium-Batterien als im Stand der Technik verwendet werden, mit denen sich dennoch mehr Kraftstoff sparen lässt als im Stand der Technik. Überdies steht ein größerer Speicher für die Zwecke der Rekuperation zur Verfügung. Der verfügbare Speicher der Lithium-Batterie wird optimal genutzt.

Erfindungsgemäß wird als unterer Schwellenwert für die Lithium-Batterie ein Ladezustand zwischen 10% und 25%, bevorzugt 20%, für den ersten oberen Schwellenwert ein Ladezustand zwischen 70% und 90%, bevorzugt 80%, und für den zweiten oberen Schwellenwert ein Ladezustand zwischen 80% und 100%, bevorzugt zwischen 90% und 100%, noch bevorzugter ein Ladezustand von 100% verwendet. Diese Ladezustände sind immer bezogen auf die Gesamtkapazität der Lithium-Batterie.

Besonders vorteilhaft erfolgt im Schritt des Absenkens des Ladezustands der Lithium-Batterie das Absenken des Ladezustands der Lithium-Batterie dadurch, dass die Blei-Batterie aus der Lithium-Batterie geladen wird. Auf diese Weise kann der Ladezustand der Lithium-Batterie in einen hinsichtlich der Lebensdauer optimalen Bereich abgesenkt und der Ladezustand der Blei-Batterie in einen hinsichtlich der Lebensdauer optimalen Bereich erhöht werden. Damit lassen sich durch eine Maßnahme die Lebensdauern von zwei auf unterschiedlichen Technologien basierenden Energiespeichern erhöhen.

Dadurch, dass im Fahrbetrieb der Ladezustand der Blei-Batterie auf üblicherweise etwa 80% eingestellt wird und dieser Ladezustand üblicherweise sehr schnell erreicht ist - auch wenn der Ladezustand der Blei-Batterie vor dem Starten nahezu 100% betragen hat, steht generell ein Speicherbereich von circa 20% der Blei-Batterie zum Absenken des Ladezustands der Lithium-Batterie zur Verfügung. Hierbei ist zu berücksichtigen, dass nach einer Standphase des Kraftfahrzeugs der Ladezustand der Blei-Batterie üblicherweise deutlich niedriger ist als 100% aufgrund eines Ruhestromverbrauchs von elektrischen Verbrauchern des Kraftfahrzeugs. Üblicherweise wird die Blei-Batterie auch entladen bei KL15-Signal "aus" beispielsweise durch einen Kühlerlüfternachlauf des Kraftfahrzeugs. Aus diesem Grund kann darauf verzichtet werden, fortwährend beim Laden der Lithium-Batterie zu prüfen, ob bei einem augenblicklichen Abstellen des Kraftfahrzeugs ein ausreichender Speicherbereich der Blei-Batterie zur Aufnahme des über dem ersten oberen Schwellenwert liegenden Energieinhalts der Lithium-Batterie zur Verfügung steht. Üblicherweise dauert es nämlich ebenfalls eine gewisse Zeit, bis der Ladezustand der Lithium-Batterie ausgehend von dem Ladezustand beim Starten auf einen deutlich darüber liegenden Wert angestiegen ist.

Das Abstellen des Kraftfahrzeugs wird üblicherweise definiert durch Ausschalten des KL15-Signals der Klemme 15, d.h. die Verbrennungskraftmaschine ist aus und es kann keine elektrische Energie mehr durch den Riemen-Starter-Generator erzeugt werden.

Eine bevorzugte Ausführungsform des erfindungsgemäßen Verfahrens zeichnet sich durch folgende weiteren Schritte aus, die zwischen Schritt b) und Schritt c) ausgeführt werden: e) Bestimmen einer Temperatur der Lithium-Batterie; und f) Ausführen der Schritte c) und d) nur dann, wenn die in Schritt e) bestimmte Temperatur unter einem vorgebbaren Schwellenwert liegt. Diese Maßnahme trägt dem Umstand Rechnung, dass bei hohen Temperaturen der Lithium-Batterie ein Laden in den über dem ersten oberen Schwellenwert liegenden Speicherbereich hinsichtlich der Lebensdauer nachteilig wäre. Dieser vorgegebene Schwellenwert für die Temperatur kann beispielsweise zwischen 60°C und 75°C liegen.

Alternativ kann in einem Schritt g) die Temperatur der Lithium-Batterie bestimmt werden und in einem anschließenden Schritt h), falls die in Schritt g) bestimmte Temperatur über einem vorgebbaren Schwellenwert liegt, folgender Schritt ausgeführt werden: Modifizieren des zweiten oberen Schwellenwerts für den Ladezustand der Lithium-Batterie in Abhängigkeit der in Schritt g) bestimmten Temperatur der Lithium-Batterie auf einen Wert zwischen dem zweiten oberen Schwellenwert und dem ersten oberen Schwellenwert. Auf diese Weise kann das erfindungsgemäße Verfahren auch noch bei höheren Temperaturen genutzt werden, dann allerdings in einem eingeschränkten Umfang. Beispielsweise kann der zweite obere Schwellenwert ausgehend von einem Maximalwert auf den ersten oberen Schwellenwert abgesenkt werden für einen Temperaturanstieg der Lithium-Batterie von 50°C auf 70°C. Bei Temperaturen kleiner gleich 50°C wird demnach mit einem Maximalwert für den zweiten oberen Schwellenwert gearbeitet, während für Temperaturen der Lithium-Batterie über 70°C lediglich, wie im Stand der Technik, bis zum ersten oberen Schwellenwert geladen wird.

Es hat sich ebenfalls als vorteilhaft erwiesen, wenn als Ladezustand der Blei-Batterie im Fahrbetrieb des Kraftfahrzeugs ein erster maximaler Ladezustand zwischen 75% und 85%, bevorzugt von 80%, verwendet wird. Durch die für die Lithium-Batterie und für die Blei-Batterie gewählten Ladezustände lässt sich einerseits die Lithium-Batterie optimal für die Rekuperation nutzen, wird andererseits die Entladung in die Blei-Batterie nach dem Abstellen des Kraftfahrzeugs ermöglicht, um sowohl die Lebensdauer der Lithium-Batterie als auch die Lebensdauer der Blei-Batterie optimal zu beeinflussen.

Bevorzugt wird in Schritt d2) die Blei-Batterie im abgestellten Zustand des Kraftfahrzeugs bis zu einem zweiten maximalen Ladezustand aufgeladen. Sofern dieser zweite maximale Ladezustand von dem der Blei-Batterie zugeordneten ersten Batterieüberwachungsmodul überwacht wird, kann demnach ein Überladen der Blei-Batterie zuverlässig verhindert werden. Als zweiter maximaler Ladezustand der Blei-Batterie wird bevorzugt ein über dem ersten maximalen Ladezustand liegender Ladezustand verwendet, bevorzugt ein Ladezustand zwischen 90% und 100%, bevorzugt von 100%.

Weitere vorteilhafte Ausführungsformen ergeben sich aus den Unteransprüchen.

Die mit Bezug auf das erfindungsgemäße Verfahren vorgestellten bevorzugten Ausführungsformen und deren Vorteile gelten entsprechend, soweit anwendbar, für eine erfindungsgemäße elektrische Anlage eines elektrisch antreibbaren Kraftfahrzeugs.

Im Nachfolgenden wird nunmehr ein Ausführungsbeispiel der vorliegenden Erfindung unter Bezugnahme auf die beigefügten Zeichnungen näher beschrieben. Diese zeigen in:
- Fig. 1: eine schematische Darstellung einer aus dem Stand der Technik bekannten elektrischen Anlage eines elektrisch antreibbaren Kraftfahrzeugs;
- Fig. 2: eine schematische Darstellung zur Erläuterung eines Ausführungsbeispiels eines erfindungsgemäßen Verfahrens zum Steuern einer elektrischen Anlage eines elektrisch antreibbaren Kraftfahrzeugs; und
- Fig. 3: in schematischer Darstellung einen Signalflussgraphen zur Erläuterung eines Ausführungsbeispiels des erfindungsgemäßen Verfahrens.

Die mit Bezug auf Fig. 1 eingeführten Bezugszeichen werden für gleiche und gleichwirkende Bauelemente weiter verwendet.

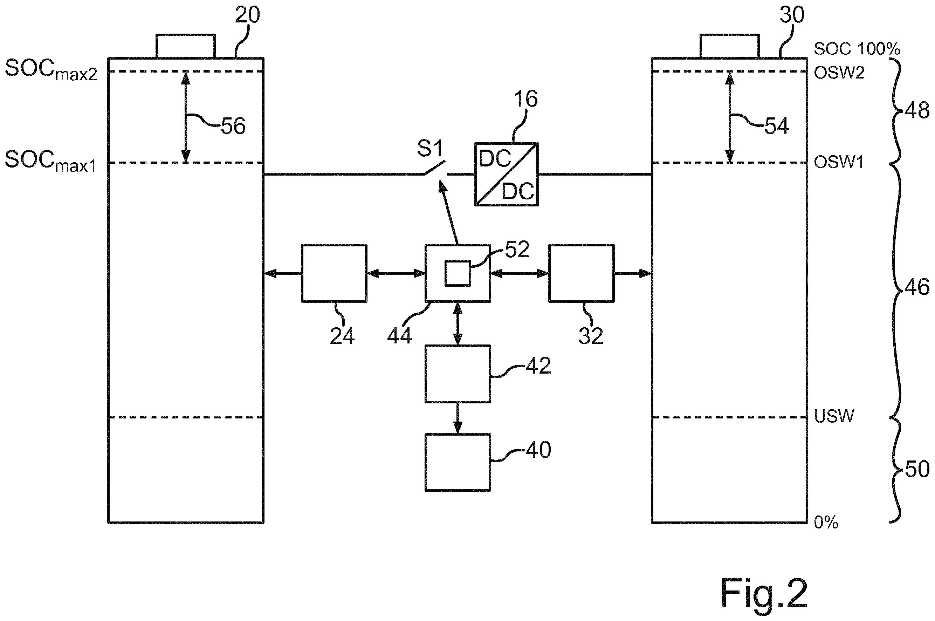

Fig. 2 zeigt eine schematische Darstellung zur Erläuterung eines Ausführungsbeispiels eines erfindungsgemäßen Verfahrens zum Steuern einer elektrischen Anlage 10 eines elektrisch antreibbaren Kraftfahrzeugs. Dargestellt sind die Lithium-Batterie 30, die damit über die Serienschaltung eines DC/DC-Wandlers 16 und eines elektronischen Schalters S1 koppelbare Blei-Batterie 20, das der Lithium-Batterie 30 zugeordnete Batterieüberwachungsmodul 32, das der Blei-Batterie 20 zugeordnete Batterieüberwachungsmodul 24 sowie eine Ladezustandssteuereinrichtung 44 der Lithium-Batterie 30, die nicht nur dazu ausgelegt ist, die Ladung der Lithium-Batterie 30 zu steuern, sondern auch den Schalter S1 zu bedienen.

Der üblicherweise erlaubte Bereich von Ladezuständen der Lithium-Batterie 30 ist mit 46 bezeichnet. Über diesem Bereich befindet sich ein Bereich 48, der üblicherweise aufgrund technologischer Randbedingungen, wie der oben erwähnten Lebensdauer, nicht genutzt wird. Ein unterer Bereich 50 darf insbesondere deshalb nicht genutzt werden, weil eine Energiereserve vorzuhalten ist, falls das Kraftfahrzeug für eine lange Dauer abgestellt wird. Üblicherweise beträgt der untere Schwellenwert USW 20% der Gesamtkapazität der Lithium-Batterie 30, der erste obere Schwellenwert OSW1 80%.

Im Stand der Technik wird der Ladezustand der Lithium-Batterie 30 zwischen dem unteren Schwellenwert USW und dem ersten oberen Schwellenwert OSW1 eingestellt. Dieser Bereich kann daher zum Rekuperieren von Energie über einen in Fig. 1 dargestellten Riemen-Starter-Generator 40 oder zum Boosten verwendet werden. Erfindungsgemäß wird ein zweiter oberer Schwellenwert OSW2 festgelegt, der über dem ersten oberen Schwellenwert OSW1 liegt. Im Ausführungsbeispiel liegt dieser obere Schwellenwert OSW2 bei 95% der Gesamtkapazität der Lithium-Batterie 30. Im Fahrbetrieb des Kraftfahrzeugs überwachen die Batterieüberwachungsmodule 32 und 24 den Energieinhalt und den Ladezustand des jeweiligen Energiespeichers 30, 20. Im DC/DC-Wandler 16 wird der Strom über einen Mess-Shunt gemessen. Alle diese Größen werden an eine Energiemanagementvorrichtung des Kraftfahrzeugs übermittelt, die vorliegend durch die Ladezustandssteuervorrichtung 44 repräsentiert wird. Am Riemen-Starter-Generator 40, siehe Fig. 1, wird die Ist-Spannung gemessen und ebenfalls an die Energiemanagementvorrichtung, hier die Ladezustandssteuervorrichtung 44, übermittelt. Der untere (USW), der erste obere (OSW1) sowie der zweite obere Schwellenwert (OSW2) sind in einer Speichervorrichtung 52 der Ladezustandssteuervorrichtung 44 abgelegt. Ebenfalls dort abgespeichert ist ein erster und ein zweiter Maximalwert SOC-ₘₐₓ₁, SOCₘₐₓ₂ für den Ladezustand der Blei-Batterie.

Im Fahrbetrieb des Kraftfahrzeugs wird erfindungsgemäß der Ladezustand der Lithium-Batterie 30 zwischen dem unteren (USW) und dem zweiten oberen Schwellenwert OSW2 für den Ladezustand der Lithium-Batterie 30 eingestellt. Damit steht im Fahrbetrieb des Kraftfahrzeugs zusätzlich der durch den Pfeil 54 gekennzeichnete Energieinhalt der Lithium-Batterie 30 zur Verfügung.

Beim Abstellen des Kraftfahrzeugs wird über das Batterieüberwachungsmodul 32 durch die Ladezustandssteuervorrichtung 44 der Ladezustand der Lithium-Batterie 30 bestimmt. Falls der Ladezustand der Lithium-Batterie 30 größer ist als der erste obere Schwellenwert OSW1, wird der Ladezustand der Lithium-Batterie 30 auf den ersten oberen Schwellenwert OSW1 abgesenkt und zwar dadurch, dass der Schalter S1 geschlossen wird und die Bleibatterie 20 aus der Lithium-Batterie 30 geladen wird. Um die Spannungsniveaus der beiden Batterien 20, 30 anzugleichen, ist der DC/DC-Wandler vorgesehen. Für den Fall, dass die Blei-Batterie 20 und die Lithium-Batterie auf einem vergleichbaren Spannungsniveau liegen, d.h. das Bordnetz des Kraftfahrzeugs weist entweder einen Niederspannungsbereich 12 oder einen Hochspannungsbereich 14 auf, vgl. Fig. 1, kann der DC/DC-Wandler 16 entfallen. Er wird dann durch einen elektrischen Schalter ersetzt.

Als einzustellender Ladezustand der Bleibatterie 20 im Fahrbetrieb des Kraftfahrzeugs wird der erste Maximalwert SOCₘₐₓ₁ verwendet, der zwischen 75% und 85% der Gesamtkapazität der Bleibatterie 20 beträgt. Im abgestellten Zustand des Kraftfahrzeugs hingegen wird der zweite Maximalwert SOCₘₐₓ₂ für den Ladezustand der Blei-Batterie 20 verwendet, der über dem ersten Maximalwert SOCₘₐₓ₁ liegt und im Ausführungsbeispiel 95% der Gesamtkapazität der Blei-Batterie 20 beträgt. Damit steht im abgestellten Zustand des Kraftfahrzeugs, d.h. die Klemme 15 ist ausgeschaltet, der Motor ist aus und es kann durch den Riemen-Starter-Generator 40 keine elektrische Energie mehr erzeugt werden, der durch den Pfeil 56 gekennzeichnete Bereich als zusätzlicher Speicherbereich zur Verfügung. Der in dem durch den Pfeil 54 gekennzeichneten Bereich der Lithium-Batterie 30 gespeicherte Energieinhalt kann demnach in den durch den Pfeil 56 gekennzeichneten Bereich umgeladen werden.

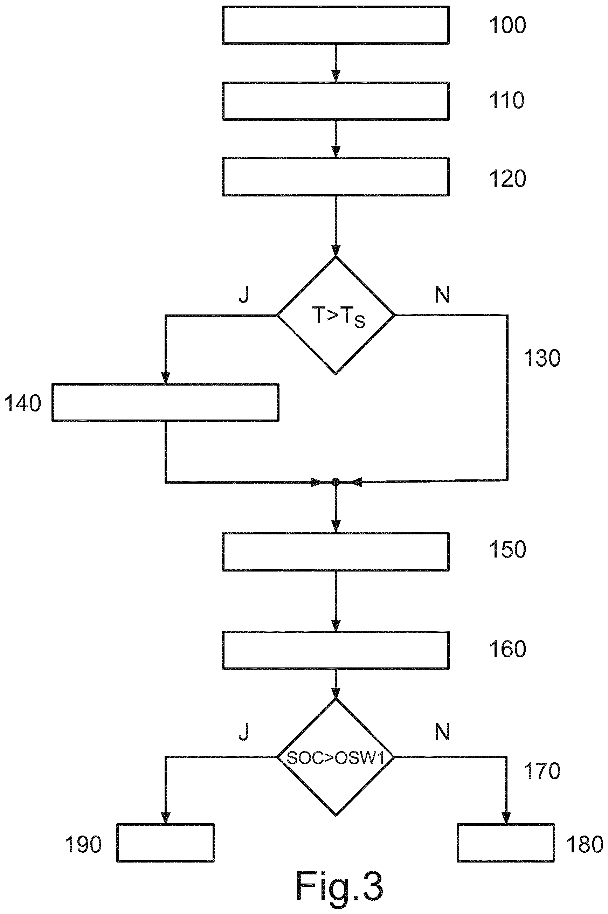

Fig. 3 zeigt einen Signalflussgraphen zur Erläuterung eines Ausführungsbeispiels des erfindungsgemäßen Verfahrens.

Zunächst wird in Schritt 100 ein unterer und ein erster oberer Schwellenwert USW, OSW1 für einen Ladezustand der Lithium-Batterie 30 festgelegt. Anschließend wird in Schritt 110 ein über dem ersten oberen Schwellenwert OSW1 liegender zweiter oberer Schwellenwert OSW2 festgelegt. In Schritt 120 wird die Temperatur der Lithium-Batterie 30 bestimmt. Wird in Schritt 130 festgestellt, dass die Temperatur über einem vorgebbaren Schwellenwert Ts liegt, wird der zweite obere Schwellenwert OSW2 für den Ladezustand der Lithium-Batterie 30 in Abhängigkeit der in Schritt 120 bestimmten Temperatur T der Lithium-Batterie 30 auf einen Wert zwischen dem zweiten oberen Schwellenwert OSW2 und dem ersten oberen Schwellenwert OSW1 modifiziert, siehe Schritt 140. Das Verfahren wird anschließend fortgesetzt in Schritt 150. Wird in Schritt 130 jedoch festgestellt, dass die Temperatur T kleiner als der vorgebbare Schwellenwert Ts ist, wird das Verfahren ebenfalls in Schritt 150 fortgesetzt, allerdings mit unmodifiziertem zweiten oberen Schwellenwert OSW2.

Schritt 150 betrifft den Fahrbetrieb des Kraftfahrzeugs. Hier wird ein Ladezustand der Lithium-Batterie 30 zwischen dem unteren (USW) und dem zweiten oberen Schwellenwert OSW2 für den Ladezustand der Lithium-Batterie 30 eingestellt. Die Schritte 160 und 170 betreffen das Kraftfahrzeug im abgestellten Zustand. In Schritt 160 wird der Ladezustand der Lithium-Batterie 30 bestimmt. Falls in Schritt 170 festgestellt wird, dass der Ladezustand nicht größer als der erste obere Schwellenwert OSW1 ist, wird das Verfahren in Schritt 180 beendet. Wird jedoch in Schritt 170 festgestellt, dass der Ladezustand der Lithium-Batterie 30 größer ist als der erste obere Schwellenwert OSW1, wird in Schritt 190 der Ladezustand der Lithium-Batterie 30 abgesenkt, indem die Blei-Batterie 20 aus der Lithium-Batterie 30 geladen wird, und zwar so lange, bis der Ladezustand der Lithium-Batterie 30 dem ersten oberen Schwellenwert OSW1 entspricht.

## Patentansprüche

1. Verfahren zum Steuern einer elektrischen Anlage (10) eines elektrisch antreibbaren Kraftfahrzeugs, wobei die elektrische Anlage (10) mindestens eine Blei-Batterie (20) und mindestens eine Lithium-Batterie (30) umfasst, die über eine Koppelvorrichtung (16) elektrisch miteinander koppelbar sind,
wobei der mindestens einen Blei-Batterie (20) ein erstes Batterieüberwachungsmodul (24) und der mindestens einen Lithium-Batterie (30) ein zweites Batterieüberwachungsmodul (32) zugeordnet sind, umfassend die folgenden Schritte:
a) Festlegen eines unteren und eines ersten oberen Schwellenwerts (USW, OSW1) für einen Ladezustand der Lithium-Batterie (30) (Schritt 100);
b) Festlegen eines über dem ersten oberen Schwellenwert (OSW1) liegenden zweiten oberen Schwellenwerts (OSW2) (Schritt 110);
c) im Fahrbetrieb des Kraftfahrzeugs: Einstellen eines Ladezustands der Lithium-Batterie (30) zwischen dem unteren (USW) und dem zweiten oberen Schwellenwert (OSW2) für den Ladezustand der Lithium-Batterie (30) (Schritt 150); und
d) beim Abstellen des Kraftfahrzeugs:
d1) Bestimmen des Ladezustands der Lithium-Batterie (30) (Schritt 160);
d2) Falls der Ladezustand der Lithium-Batterie (30) größer ist als der erste obere Schwellenwert (OSW1): Absenken des Ladezustands der Lithium-Batterie (30) auf den ersten oberen Schwellenwert (OSW1) (Schritt 170, Schritt 180, Schritt 190),
**gekennzeichnet dadurch, dass**
als unterer Schwellenwert (USW) für die Lithium-Batterie (30) ein Ladezustand zwischen 10 und 25%, für den ersten oberen Schwellenwert (OSW1) ein Ladezustand zwischen 70 und 90%, und für den zweiten oberen Schwellenwert (OSW2) ein Ladezustand zwischen 80 und 100% der Gesamtkapazität der Lithium-Batterie (30) verwendet wird.

2. Verfahren nach Anspruch 1,
**dadurch gekennzeichnet, dass**
im Schritt d2) das Absenken des Ladezustands der Lithium-Batterie (30) dadurch erfolgt, dass die Blei-Batterie (20) aus der Lithium-Batterie (30) geladen wird (Schritt 190).

3. Verfahren nach einem der Ansprüche 1 oder 2,
**gekennzeichnet durch** folgende weiteren Schritte, die zwischen Schritt b) und Schritt c) ausgeführt werden:
e) Bestimmen einer Temperatur der Lithium-Batterie (30); und
f) Ausführen der Schritte c) und d) nur dann, wenn die in Schritt e) bestimmte Temperatur unter einem vorgebbaren Schwellenwert liegt.

4. Verfahren nach einem der Ansprüche 1 oder 2,
**gekennzeichnet durch** folgende weiteren Schritte:
g) Bestimmen einer Temperatur (T) der Lithium-Batterie (30) (Schritt 120);
h) falls die in Schritt g) bestimmte Temperatur (T) über einem vorgebbaren Schwellenwert liegt: Modifizieren des zweiten oberen Schwellenwerts (OSW2) für den Ladezustand der Lithium-Batterie (30) in Abhängigkeit der in Schritt g) bestimmten Temperatur (T) der Lithium-Batterie (30) auf einen Wert zwischen dem zweiten oberen Schwellenwert (OSW2) und dem ersten oberen Schwellenwert (OSW1) (Schritt 130, Schritt 140).

5. Verfahren nach einem der vorhergehenden Ansprüche,
**dadurch gekennzeichnet, dass**
als unterer Schwellenwert (USW) für die Lithium-Batterie (30) ein Ladezustand von 20%, für den ersten oberen Schwellenwert (OSW1) ein Ladezustand von 80%, und für den zweiten oberen Schwellenwert (OSW2) ein Ladezustand zwischen 90 und 100%, bevorzugt ein Ladezustand von 100%, der Gesamtkapazität der Lithium-Batterie (30) verwendet wird.

6. Verfahren nach einem der vorhergehenden Ansprüche,
**dadurch gekennzeichnet, dass**
als Ladezustand der Blei-Batterie (20) im Fahrbetrieb des Kraftfahrzeugs ein erster Maximalwert (SOCₘₐₓ₁) zwischen 75 und 85%, bevorzugt von 80%, der Gesamtkapazität der Blei-Batterie (20) verwendet wird.

7. Verfahren nach Anspruch 2,
**dadurch gekennzeichnet, dass**
in Schritt d2) die Blei-Batterie (20) im abgestellten Zustand des Kraftfahrzeugs bis zu einem zweiten Maximalwert (SOCₘₐₓ₂) für den Ladezustand aufgeladen wird.

8. Verfahren nach Anspruch 7,
**dadurch gekennzeichnet, dass**
als zweiter Maximalwert (SOCₘₐₓ₂) für den Ladezustand der Blei-Batterie (20) ein über dem ersten Maximalwert (SOCₘₐₓ₁) liegender Wert verwendet wird, bevorzugt ein Wert zwischen 90 und 100%, bevorzugt von 100%, der Gesamtkapazität der Blei-Batterie (20).

9. Elektrische Anlage (10) eines elektrisch antreibbaren Kraftfahrzeugs umfassend:
- mindestens eine Blei-Batterie (20);
- mindestens eine Lithium-Batterie (30), die über eine Koppelvorrichtung (16) elektrisch mit der Blei-Batterie (20) koppelbar ist,
- ein erstes Batterieüberwachungsmodul (24), das der mindestens einen Blei-Batterie (20) zugeordnet ist;
- ein zweites Batterieüberwachungsmodul (32), das der mindestens einen Lithium-Batterie (30) zugeordnet ist;
- eine Ladezustandssteuereinrichtung (44) der Lithium-Batterie (30); sowie
- eine Speichervorrichtung (52), in der ein unterer (USW) und ein erster oberer Schwellenwert (OSW1) für einen Ladezustand der Lithium-Batterie (30) abgespeichert sind;
in der Speichervorrichtung (52) weiterhin ein über dem ersten oberen Schwellenwert (OSW1) liegender zweiter oberer Schwellenwert (OSW2) abgespeichert ist;
wobei die Ladezustandssteuereinrichtung (44) ausgelegt ist,
- im Fahrbetrieb des Kraftfahrzeugs einen Ladezustand der Lithium-Batterie (30) zwischen dem unteren (USW) und dem zweiten oberen Schwellenwert (OSW2) der Lithium-Batterie (30) einzustellen; und
- beim Abstellen des Kraftfahrzeugs den Ladezustand der Lithium-Batterie (30) zu bestimmen,
**dadurch gekennzeichnet, dass**
die Ladezustandssteuereinrichtung (44) weiterhin ausgelegt ist, den Ladezustand der Lithium-Batterie (30) auf den ersten oberen Schwellenwert (OSW1) abzusenken, falls der Ladezustand der Lithium-Batterie (30) größer ist als der erste obere Schwellenwert (OSW1),
wobei als unterer Schwellenwert (USW) für die Lithium-Batterie (30) ein Ladezustand zwischen 10 und 25%, für den ersten oberen Schwellenwert (OSW1) ein Ladezustand zwischen 70 und 90%, und für den zweiten oberen Schwellenwert (OSW2) ein Ladezustand zwischen 80 und 100% der Gesamtkapazität der Lithium-Batterie (30) abgespeichert ist.

## Claims

1. Method for controlling an electrical system (10) of an electrically drivable motor vehicle, wherein the electrical system (10) comprises at least one lead-acid battery (20) and at least one lithium battery (30) which can be electrically coupled to one another via a coupling device (16),
wherein a first battery monitoring module (24) is assigned to the at least one lead-acid battery (20) and a second battery monitoring module (32) is assigned to the at least one lithium battery (30),
comprising the following steps:
a) determining a lower threshold value and a first upper threshold value (USW, OSW1) for a state of charge of the lithium battery (30) (step 100);
b) determining a second upper threshold value (OSW2) above the first upper threshold value (OSW1) (step 110);
c) during driving operation of the motor vehicle: adjusting a state of charge of the lithium battery (30) between the lower threshold value (USW) and the second upper threshold value (OSW2) for the state of charge of the lithium battery (30) (step 150); and
d) when the motor vehicle is switched off:
d1) determining the state of charge of the lithium battery (30) (step 160);
d2) if the state of charge of the lithium battery (30) is greater than the first upper threshold value (OSW1): lowering the state of charge of the lithium battery (30) to the first upper threshold value (OSW1) (step 170, step 180, step 190),
**characterised in that** a state of charge between 10 and 25% of the total capacity of the lithium battery (30) is used as the lower threshold value (USW) for the lithium battery (30), a state of charge between 70 and 90% of the total capacity of the lithium battery is used as the first upper threshold value (OSW1), and a state of charge between 80 and 100% of the total capacity of the lithium battery is used as the second upper threshold value (OSW2).

2. Method according to claim 1,
**characterised in that**
in step d2), the state of charge of the lithium battery (30) is lowered by charging the lead-acid battery (20) from the lithium battery (30) (step 190).

3. Method according to any of claims 1 or 2,
**characterised by** the following further steps performed between step b) and step c):
e) determining a temperature of the lithium battery (30); and
f) performing steps c) and d) only when the temperature determined in step e) is below a predeterminable threshold value.

4. Method according to any of claims 1 or 2,
**characterised by** the following further steps:
g) determining a temperature (T) of the lithium battery (30) (step 120);
h) if the temperature (T) determined in step g) is above a predeterminable threshold value: modifying the second upper threshold value (OSW2) for the state of charge of the lithium battery (30) as a function of the temperature (T) of the lithium battery (30) determined in step g) to a value between the second upper threshold value (OSW2) and the first upper threshold value (OSW1) (step 130, step 140).

5. Method according to any of the preceding claims,
**characterised in that**
a state of charge of 20% of the total capacity of the lithium battery (30) is used as the lower threshold value (USW) for the lithium battery (30), a state of charge of 80% of the total capacity of the lithium battery is used as the first upper threshold value (OSW1), and a state of charge between 90 and 100%, preferably a state of charge of 100%, of the total capacity of the lithium battery is used as the second upper threshold value (OSW2).

6. Method according to any of the preceding claims,
**characterised in that**
a first maximum value (SOCₘₐₓ₁) between 75 and 85%, preferably of 80%, of the total capacity of the lead-acid battery (20) is used as the state of charge of the lead-acid battery (20) during driving operation of the motor vehicle.

7. Method according to claim 2,
**characterised in that**
in step d2) the lead-acid battery (20) is charged up to a second maximum value (SOCₘₐₓ₂) for the state of charge when the motor vehicle is switched off.

8. Method according to claim 7,
**characterised in that**
a value above the first maximum value (SOCₘₐₓ₁), preferably a value between 90 and 100%, preferably 100%, of the total capacity of the lead-acid battery (20) is used as the second maximum value (SOCₘₐₓ₂) for the state of charge of the lead-acid battery (20).

9. Electrical system (10) of an electrically drivable motor vehicle, comprising:
- at least one lead-acid battery (20);
- at least one lithium battery (30) which can be electrically coupled to the lead-acid battery (20) via a coupling device (16);
- a first battery monitoring module (24) assigned to the at least one lead-acid battery (20);
- a second battery monitoring module (32) assigned to the at least one lithium battery (30);
- a state-of-charge control apparatus (44) of the lithium battery (30); and
- a storage device (52) in which a lower threshold value (USW) and a first upper threshold value (OSW1) for a state of charge of the lithium battery (30) are stored;
the storage device (52) further storing a second upper threshold value (OSW2) above the first upper threshold value (OSW1);
wherein the state-of-charge control apparatus (44) is configured to
- set a state of charge of the lithium battery (30) between the lower threshold value (USW) and the second upper threshold value (OSW2) of the lithium battery (30) during driving operation of the motor vehicle; and
- determine the state of charge of the lithium battery (30) when the motor vehicle is switched off,
**characterised in that**
the state-of-charge control apparatus (44) is further configured to lower the state of charge of the lithium battery (30) to the first upper threshold value (OSW1) if the state of charge of the lithium battery (30) is greater than the first upper threshold value (OSW1),
wherein a state of charge between 10 and 25% of the total capacity of the lithium battery (30) is stored as the lower threshold value (USW) for the lithium battery (30), a state of charge between 70 and 90% of the total capacity of the lithium battery is stored as the first upper threshold value (OSW1), and a state of charge between 80 and 100% of the total capacity of the lithium battery is stored as the second upper threshold value (OSW2).

## Revendications

1. Procédé de commande d'une installation électrique (10) d'un véhicule à moteur à propulsion électrique, dans lequel l'installation électrique (10) comprend au moins une batterie au plomb (20) et au moins une batterie au lithium (30), qui peuvent être couplées électriquement entre elles par l'intermédiaire d'un dispositif de couplage (16),
dans lequel un premier module de surveillance de batterie (24) est associé à ladite au moins une batterie au plomb (20) et un second module de surveillance de batterie (32) est associé à ladite au moins une batterie au lithium (30),
comprenant les étapes suivantes consistant à :
a) définir un seuil inférieur et un premier seuil supérieur (USW, OSW1) pour un état de charge de la batterie au lithium (30) (étape 100) ;
b) définir une seconde valeur de seuil supérieure (OSW2) supérieure à la première valeur de seuil supérieure (OSW1) (étape 110) ;
c) en mode de conduite du véhicule à moteur : établir un état de charge de la batterie au lithium (30) entre la valeur de seuil inférieure (USW) et la deuxième valeur de seuil supérieure (OSW2) pour l'état de charge de la batterie au lithium (30) (étape 150) ; et
d) lors du stationnement du véhicule automobile :
d1) déterminer l'état de charge de la batterie au lithium (30) (étape 160) ;
d2) si l'état de charge de la batterie au lithium (30) est supérieur à la première valeur de seuil supérieure (OSW1) : abaisser l'état de charge de la batterie au lithium (30) jusqu'à la première valeur de seuil supérieure (OSW1) (étape 170, étape 180, étape 190),
**caractérisé en ce que**, comme valeur de seuil inférieure (USW) pour la batterie au lithium (30), on utilise un état de charge entre 10 et 25 %, pour la première valeur de seuil supérieure (OSW1), un état de charge entre 70 et 90 %, et pour la seconde valeur seuil supérieure (OSW2), un état de charge entre 80 et 100 % de la capacité totale de la batterie au lithium (30).

2. Procédé selon la revendication 1,
**caractérisé en ce que**
à l'étape d2), l'abaissement de l'état de charge de la batterie au lithium (30) est effectué en chargeant la batterie au plomb (20) à partir de la batterie au lithium (30) (étape 190).

3. Procédé selon l'une quelconque des revendications 1 ou 2,
**caractérisé par** les étapes supplémentaires suivantes, qui sont exécutées entre l'étape b) et l'étape c) :
e) déterminer une température de la batterie au lithium (30) ; et
f) exécuter les étapes c) et d) uniquement si la température déterminée à l'étape e) est inférieure à une valeur de seuil pouvant être prédéfinie.

4. Procédé selon l'une quelconque des revendications 1 ou 2,
**caractérisé par** les étapes supplémentaires suivantes consistant à :
g) déterminer une température (T) de la batterie au lithium (30) (étape 120) ;
h) si la température (T) déterminée à l'étape g) est supérieure à une valeur de seuil pouvant être prédéfinie : modifier la seconde valeur de seuil supérieure (OSW2) pour l'état de charge de la batterie au lithium (30) en fonction de la température (T) de la batterie au lithium (30) déterminée à l'étape g) à une valeur comprise entre la seconde valeur de seuil supérieure (OSW2) et la première valeur de seuil supérieure (OSW1) (étape 130, étape 140).

5. Procédé selon l'une quelconque des revendications précédentes,
**caractérisé en ce que**
pour la batterie au lithium (30), on utilise comme valeur de seuil inférieure (USW) un état de charge de 20 %, pour la première valeur de seuil supérieure (OSW1) un état de charge de 80 %, et pour la seconde valeur de seuil supérieure (OSW2) un état de charge entre 90 et 100 %, de préférence un état de charge de 100 %, de la capacité totale de la batterie au lithium (30).

6. Procédé selon l'une quelconque des revendications précédentes,
**caractérisé en ce que**
on utilise comme état de charge de la batterie au plomb (20) pendant le fonctionnement du véhicule automobile une première valeur maximale (SOCₘₐₓ1) entre 75 et 85 %, de préférence de 80 %, de la capacité totale de la batterie au plomb (20).

7. Procédé selon la revendication 2,
**caractérisé en ce que**
à l'étape d2), la batterie au plomb (20) est chargée jusqu'à une seconde valeur maximale (SOCₘₐₓ2) pour l'état de charge lorsque le véhicule automobile est à l'arrêt.

8. Procédé selon la revendication 7,
**caractérisé en ce que**
on utilise comme seconde valeur maximale (SOCₘₐₓ2) pour l'état de charge de la batterie au plomb (20) une valeur supérieure à la première valeur maximale (SOCₘₐₓ1), de préférence une valeur comprise entre 90 et 100 %, de préférence de 100 %, de la capacité totale de la batterie au plomb (20).

9. Installation électrique (10) d'un véhicule automobile à propulsion électrique comprenant :
- au moins une batterie au plomb (20) ;
- au moins une batterie au lithium (30) qui peut être couplée électriquement à la batterie au plomb (20) par l'intermédiaire d'un dispositif de couplage (16),
- un premier module de surveillance de batterie (24) qui est associé à ladite au moins une batterie au plomb (20) ;
- un second module de surveillance de batterie (32) qui est associé à ladite au moins une batterie au lithium (30) ;
- un dispositif de commande d'état de charge (44) de la batterie au lithium (30) ; et
- un dispositif de mémoire (52) dans lequel une valeur de seuil inférieure (USW) et une première valeur de seuil supérieure (OSW1) pour un état de charge de la batterie au lithium (30) sont mémorisées ;
une seconde valeur de seuil supérieure (OSW2) située au-dessus de la première valeur de seuil supérieure (OSW1) est en outre mémorisée dans le dispositif de mémoire (52) ;
dans laquelle le dispositif de commande d'état de charge (44) est conçu pour
- établir un état de charge de la batterie au lithium (30) entre la valeur de seuil inférieure (USW) et la seconde valeur de seuil supérieure (OSW2) de la batterie au lithium (30) en mode de conduite du véhicule automobile ; et
- déterminer l'état de charge de la batterie au lithium (30) lors de l'arrêt du véhicule automobile,
**caractérisé en ce que**
le dispositif de commande d'état de charge (44) est en outre adapté pour abaisser l'état de charge de la batterie au lithium (30) jusqu'à la première valeur de seuil supérieure (OSW1) si l'état de charge de la batterie au lithium (30) est supérieur à la première valeur de seuil supérieure (OSW1),
dans lequel un état de charge compris entre 10 et 25 % est mémorisé comme valeur de seuil inférieure (USW) pour la batterie au lithium (30), un état de charge compris entre 70 et 90 % est mémorisé pour la première valeur de seuil supérieure (OSW1), et un état de charge compris entre 80 et 100 % de la capacité totale de la batterie au lithium (30) est mémorisé pour la seconde valeur de seuil supérieure (OSW2).
